Europäisches Patentamt

European Patent Office

Office européen des brevets

(11) Veröffentlichungsnummer: **0 327 528**
**A2**

(12) # EUROPÄISCHE PATENTANMELDUNG

(21) Anmeldenummer: 89890017.0

(22) Anmeldetag: 25.01.89

(51) Int. Cl.⁴: **H 01 M 12/08**

(30) Priorität: 01.02.88 AT 195/88

(43) Veröffentlichungstag der Anmeldung:
09.08.89 Patentblatt 89/32

(84) Benannte Vertragsstaaten:
BE CH DE ES FR GB GR IT LI LU NL SE

(71) Anmelder: S.E.A. Studiengesellschaft für
Energiespeicher und Antriebssysteme Gesellschaft
m.b.H.
Bleckmanngasse 10 Postfach 49
A-8680 Mürzzuschlag (AT)

(72) Erfinder: Tomazic, Gerd, Dipl.-Ing.Dr.
Hofkirchergasse 4
A-8680 Mürzzuschlag (AT)

(74) Vertreter: Widtmann, Georg, Dr.
S.E.A. Studiengesellschaft für Energiespeicher und
Antriebssysteme Gesellschaft m.b.H. Postfach 49
Bleckmanngasse 10
A-8680 Mürzzuschlag (AT)

(54) **Metall/Halogen-Batterie.**

(57) Metall/Halogen-, insbesondere Zink/Brom-Batterie, mit
einer Vielzahl von im wesentlichen ebenen, gegebenenfalls
bipolaren, Elektroden (13), zwischen welchen im wesentlichen
ebene Separatoren (10) angeordnet sind, die an ihren Rändern
miteinander verbunden, insbesondere verschweißt, sind, wodurch Anoden- und Kathodenräume jeweils mit zumindest einer
Zu- und Abflußöffnung gebildet sind, durch welche Räume
Elektrolytflüssigkeiten aus zwei Vorratsgefäßen mit voneinander getrennten Elektrolytkreisläufen, gegebenenfalls über Pumpen (6, 7), leitbar sind, wodurch die Elektroden (13) an ihren
Randbereichen eine zumindest teilweise umlaufende Verjüngung (14, 16, 17) aufweisen und die Separatoren (10) an ihren
mit den Randbereichen der Elektroden mittel- bzw. unmittelbar
anliegenden Randbereich eine zumindest teilweise umlaufende
Verdickung (11, 18) aufweisen, wobei die größte Erstreckung (f)
der Verdickung des Separators (10), gemessen normal zur
Separatorfläche, größer, insbesondere das zwei- bis vierfache
beträgt, als die kleinste Erstrekung (e) der Verjüngung der
Elektrode (13) gemessen normal zur Elektrodenfläche, ist.

Fig. 5

## Beschreibung

### Metall/Halogen-Batterie

Die Erfindung bezieht sich auf eine Metall/Halogen-, insbesondere Zink/Brom-Batterie, mit einer Vielzahl von im wesentlichen ebenen, gegebenenfalls bipolaren, Elektroden, zwischen welchen im wesentlichen ebene Separatoren angeordnet sind.

Bei Metall/Halogen-Batterien mit umlaufenden Elektrolyten besteht das Bestreben, aus Korrosionsgründen sowohl die Elektroden als auch die Separatoren aus gegenüber dem Halogen, insbesondere dem Brom, resistenten Werkstoffen, insbesondere Polypropylen bzw. Polyäthylen, aufzubauen. Da die Kapazität einer derartigen Batterie auch von der Größe der Elektroden bestimmt ist, müssen die Elektroden eine Mindestgröße aufweisen. Zur Erhöhung der Leistung einer Batterie wurde bislang vorgeschlagen, die Leitfähigkeit des Elektrolyten, z. B. durch Zugaben von Leitfähigkeitssalzen, zu erhöhen.

Der vorliegenden Erfindung liegt die Aufgabe zugrunde, eine Batterie zu schaffen, die unabhängig von der Zusammensetzung des Elektrolyten einen geringeren Innenwiderstand aufweist, wobei gleichzeitig die Ausgestaltung der Elektroden und Separatoren derart ist, daß ein Verwerfen, wie es bei dünnflächigen Gebilden leicht eintritt, besonders gut vermieden werden kann.

Die erfindungsgemäße Metall/Halogen-, insbesondere Zink-Brom-Batterie, mit einer Vielzahl von im wesentlichen ebenen, gegebenenfalls bipolaren, Elektroden, zwischen welchen im wesentlichen ebene Separatoren angeordnet sind, die an ihren Rändern miteinander verbunden, insbesondere verschweißt, sind, wodurch Anoden- und Kathodenräume mit zumindest einer Zu- und Abflußöffnung gebildet sind, durch welche Räume Elektrolytflüssigkeit aus zwei Vorratsgefäßen mit voneinander getrennten Elektrolytkreisläufen, gegebenenfalls über Pumpen, leitbar sind, besteht im wesentlichen darin, daß die Elektroden an ihren Randbereichen eine zumindest teilweise umlaufende Verjüngung aufweisen und die Separatoren an ihren mit den Randbereichen der Elektrode mittel- bzw. unmittelbar anliegenden Randbereich eine zumindest teilweise umlaufende Verdickung aufweisen, wobei die größte Erstreckung der Verdickung des Separators, gemessen normal zur Separatorflächengröße, insbesondere das zwei- bis vierfache beträgt, als die kleinste Erstreckung der Verjüngung der Elektrode, gemessen normal zur Elektrodenfläche, ist. Durch die Verjüngung der Elektroden an ihren Randbereichen kann die Elektrode selbst dicker ausgebildet werden, womit der Innenwiderstand einer Zelle bei gleicher Dimensionierung der Zelle geringer gehalten werden kann. Weiters ist bei dickerer Ausbildung der Elektrode ein Verwerfen derselben im wesentlichen hinan gehalten. Durch die stärkere Ausbildung des Randes an den Separatoren erhält der Separator einen Rahmen, welcher dem Separator eine wesentliche Verstärkung gibt, wobei durch die mittel- bzw. unmittelbar kooperierenden Verjüngungen und Verdickungen jeweils die Leerräume in den Zellen gegeben sind, welche für die Aufnahme für die Elektrolytflüssigkeit dienen. Damit ist auf besonders einfache Art und Weise die Möglichkeit geschaffen, den Innenwiderstand einer Zelle zu senken, wobei gleichzeitig die mechanische Stabilität, insbesondere unter thermischen Belastungen der Zelle, wesentlich erhöht wird.

Weisen die Verjüngungen und/oder die Verdickungen der Elektroden gleichbleibenden Querschnitt auf, so können bei dem Zusammenbau der Batterie Ungenauigkeiten bei der Dimensionierung des Randes auf besonders einfache Art und Weise ausgeglichen werden. Sind die Zu- und/oder Abflußleitungen für den Elektrolyten durch die Verdickung des Separators geführt, so können die Elektrolyträume besonders schmal gehalten werden, da die Zuflußöffnungen für die Leitungen nicht mehr durch den Elektrolytraum bestimmt sind. Ist die jeweilige Erstrekkung normal zur Elektrodenfläche der Verjüngungen unterschiedlich je nach Flächenseite der Elektrode, so können auf besonders einfache Art und Weise unterschiedlich ausgebildete Elektrolyträume bezüglich ihrer Dicke erreicht werden, da ein Elektrodenraum, in welchem das Metall, insbesondere Zink, abgeschieden wird, ein größeres Volumen aufgrund des abzuscheidenden Zinks erforderlich ist, wohingegen in dem Elektrolytraum, in welchem Brom abgeschieden wird, dieses zusätzliche Volumen nicht erforderlich ist, da das Brom beispielsweise durch einen Komplexbildner gebunden werden kann und mit dem Elektrolyten, z. B. in Form einer stabilen oder nichtstabilen Emulsion, abgeleitet werden kann. Auf diese Weise kann somit eine asymmetrische Ausbildung der Zellen erreicht werden, wobei auf besonders einfache Art und Weise dem unterschiedlichen Platzbedürfnis Rechnung getragen ist.

Sind die Verdickungen und/oder die Verdünnungen aus einem Rahmen, insbesondere aus thermoplastischem Material, gebildet, so können damit mehrere Vorteile erreicht werden. So ist es beispielsweise nicht erforderlich, daß das elektrisch leitfähige Material, beispielsweise kohlenstoffgefülltes Polyäthylen, bis zu den Rändern geführt wird, wo die Verschweißung mit den Separatoren erfolgt. Es besteht auch die Möglichkeit, daß der Separator einen Rahmen aus einem anderen Material aufweist, sodaß dieses Material beispielsweise eine größere mechanische Stabilität als das des Separators aufweisen kann. Weiters besteht die Möglichkeit, diesen Rahmen bereits aus thermoplastischem Material auszuführen, womit beispielsweise ein besseres Verschweißen bei geeigneter Materialwahl erreicht werden kann.

Sind die Verjüngungen und/oder Verdickungen im Querschnitt im wesentlichen rechteckig ausgebildet, so können auch leichtere Verschiebungen in der Transversalebene während der Montage durchgeführt werden.

Sind die Verjüngungen und/oder die Verdickungen im Querschnitt sich zum Rand bzw. zum Inneren des Separators verjüngend ausgebildet, so kann eine Selbstjustierung sowohl der Separatoren als auch der Elektroden bei der Montage erreicht werden, sodaß bei einer hohen Fertigungsgenauigkeit von Separatoren und Elektroden eine besonders genaue Ausbildung der Batterie erreicht werden kann, womit geringere Toleranzen einhaltbar sind, sodaß in Summe der Innenwiderstand auch noch verringert werden kann.

Sind die Verjüngungen und/oder die Verdickungen mit zu dem elektrochemisch bzw. ionenspezifischen Material der Elektroden bzw. Separatoren unterschiedlichen Material aufgebaut, so kann eine maximale Materialwahl erreicht werden, die den jeweiligen Zwecken besonders entgegenkommt.

Sind die aktive elektrisch leitende Masse der Elektroden mit kohlenstoffgefüllten thermoplastischen Material, insbesondere Polyäthylen, und die Randbereiche elektrisch nichtleitend aufgebaut, so ist eine Elektrode erhaltbar, die einerseits einen besonders geringen Innenwiderstand aufweist, da die Elektrode mit Kohlenstoff besonders hoch gefüllt sein kann, wobei andererseits die Passflächen der Verdünnungen, entsprechend ihren Anforderungen, mit hoher Genauigkeit und aus geeignetem Material aufgebaut sein können.

Im folgenden wird die Erfindung anhand der Zeichnung näher erläutert.

Es zeigen:

Fig. 1 eine schematische Ansicht einer Zink/Brom-Batterie,

Fig. 2 den Schnitt durch eine Zink/Brom-Batterie, einen Randbereich,

Fig. 3 in Ansicht eine Elektrode und einen Separator und die

Fig. 4 Fig. 5 und Fig. 6 verschiedene Ausführungsformen der Randbereiche von Elektrode bzw. Separator.

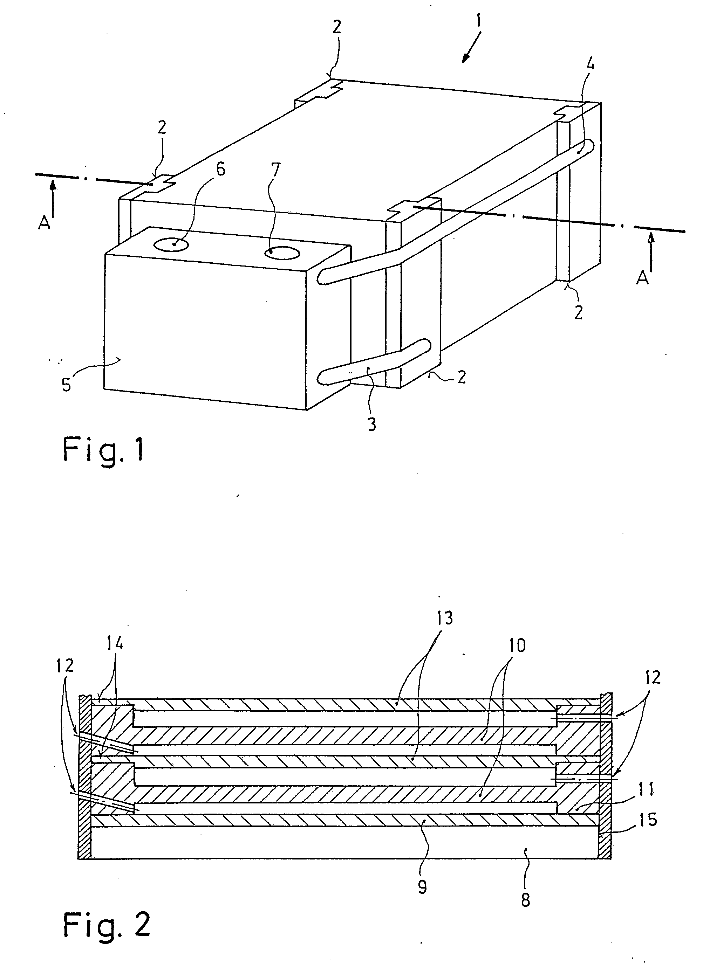

Bei der in Fig. 1 dargestellten Zink/Brom-Batterie liegt ein Paket 1 von waagrecht angeordneten Separatoren und Elektroden vor. Die Zu- und Ableitungen der Elektrolytflüssigkeit wird über Zellenverbinder 2 verwirklicht, die rohrförmigen Fortsätze aufweisen (nicht dargestellt), welche jeweils in die Anoden- bzw. Kathodenräume reichen. Diese Zu- bzw. Ableitungen können über eine Vorrichtung zur Kompensierung vagabundierender Ströme verbunden sein. Die Zellverbinder sind ihrerseits über geeignete Leitungen 3, 4 mit einem Behälter 5 verbunden, welcher zwei weitere Behälter für die beiden Elektrolyten aufweist, in welche Pumpen 6, 7 eintauchen, die den Flüssigkeitslauf gewährleisten.

In Fig. 2 ist ein Schnitt durch das Paket 1 dargestellt, wobei lediglich die zuunterst liegende Deckplatte 8 und einige Elektroden und Separatoren im Schnitt dargestellt sind. An der Deckplatte anliegend ist eine Endelektrode 9 dargestellt. An dieser Elektrode 9 liegt ein Separator 10 mit seinem Randbereich an. Der Randbereich ist mit einer Verdickung 11 versehen, die gegenüber dem Separator besonders verdickt ausgebildet ist und weist weiters Zu- und Abflußleitungen 12 für den Elektrolyten auf. Die Elektroden 13 weisen an ihren Randbereichen Verjüngungen 14 auf. Sowohl die Elektroden als auch die Separatoren wurden an ihren Rändern aufgeschmolzen und es wurde eine die Separatoren und Elektroden umhüllende Schweißschichte 15 gebildet. Durch diese Schweißschichte 15 sind auch die Zu- und Ableitungen 12 geführt. In diese Zu- und Ableitungen greifen die Zellverbinder 2 ein, um den Elektrolytkreislauf zu verwirklichen.

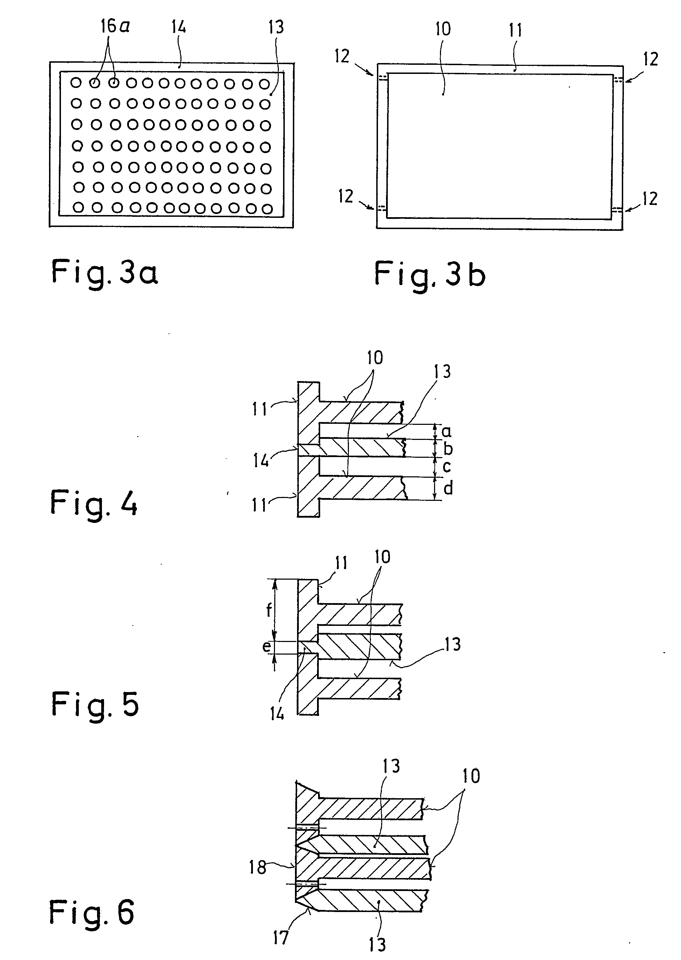

Bei der in Fig. 3 a dargestellten Elektrode ist eine umlaufende periphere Verjüngung 14 vorgesehen. Diese periphere Verjüngung 14 besteht aus ungefülltem Polyäthylen, wohingegen die Elektrode, und zwar der aktive Teil der Elektrode 9, aus mit Aktivkohle gefüllten Polyäthylen aufgebaut ist. Die Elektrode weist weiters Noppen 16 auf, die als Distanzhalter gegenüber dem Separator dienen können und weiters bei geeigneter Formausbildung als Verankerungselemente für das abzuscheidende Metall, insbesondere Zink, dienen können.

Bei den in Fig. 3 b dargestellten Separator 10 ist eine umlaufende periphere Verdickung 11 vorgesehen. Durch diese Verdickung 11 sind Zu- und Abflußleitungen 12 für den Elektrolyten vorgesehen.

In Fig. 4 ist der Randbereich von aneinandergelegten Separatoren 10 und Elektroden 13 dargestellt. Die Verjüngung 16 der Elektrode 13 ist so ausgebildet, daß sie lediglich auf einer Seite, gegenüber der Elektrodenfläche, abgesetzt ist, sodaß eine umlaufende Stufe erreicht ist, wohingegen auf der anderen Seite die Ebene der Elektrode bis zum Rand geführt ist. Die Verdickung 11 des Separators ist symmetrisch ausgeführt. Die Dicke des einen Elektrolytraumes beträgt a, die Dicke der Elektrode b, des weiteren Elektrolytraumes c und die des Separators d. Typischerweise beträgt die Dicke a 0,3 mm, die Dicke b der Elektrode 1,4 mm, die Dicke c des weiteren Elektrolytraumes 0,5 mm und die Dicke d des Separators 0,2 mm. Durch eine derartige Ausbildung kann dar Innenwiderstand der Zelle von ca. 2 m $\Omega$/V auf ca. 0,85 m $\Omega$/V gesenkt werden. Weiters kann, und auch hier liegt ein besonders positiver Effekt der vorliegenden Erfindung, die Strömungsgeschwindigkeit erhöht werden, wodurch bessere Elektrolytverteilung und Brom-Komplexausspülung erreicht werden kann. Weiters ist die Möglichkeit gegeben, den Anodenhalbzellenraum mit einem wesentlich geringeren Volumen, z. B. 30 cm³, auszustatten, sodaß das Selbstentladepotential gegeben durch das im Elektrolyten vorhandene freie Brom wesentlich reduziert werden kann. Weiters gesteht die Möglichkeit, durch einseitige Druckbeaufschlagung, die Elektrode als Membran zu verwenden, die sich in den Anodenraum ausbeult, um ein möglichstes Entleeren des Anodenraumes zu erreichen. Dieser Vorgang kann, insbesondere wenn die Batterie länger oder kurzfristiger nicht in Funktion sein soll, das Selbstentladepotential noch verringern.

Bei dem in Fig. 5 dargestellten Randbereich im Schnitt von Separatoren und Elektrode ist deutlich erkennbar, daß die kleinste Erstreckung e der Verjüngung der Elektrode, gemessen normal zur Elektrodenfläche, weniger als ein Viertel der Erstreckung f der Verdickung 11 des Separators beträgt.

Während die in Fig. 4 und Fig. 5 dargestellten Verdickungen bzw. Verjüngungen im Querschnitt rechteckig ausgebildet sind, ist in Fig. 6 eine weitere Ausführungsform dargestellt, wobei die Verjüngung 17 der Elektrode 13 spitzzulaufend ausgebildet ist, wohingegen die Verdickung 18 des Separators 10 nach innen zulaufend verjüngend ausgebildet sind.

**Patentansprüche**

1. Metall/Halogen-, insbesondere Zink/Brom-Batterie, mit einer Vielzahl von im wesentlichen ebenen, gegebenenfalls bipolaren, Elektroden (13), zwischen welchen im wesentlichen ebene Separatoren (10) angeordnet sind, die an ihren Rändern miteinander verbunden, insbesondere verschweißt, sind, wodurch Anoden- und Kathodenräume jeweils mit zumindest einer Zu- und Abflußöffnung gebildet sind, durch welche Räume Elektrolytflüssigkeiten aus zwei Vorratsgefäßen mit voneinander getrennten Elektrolytkreisläufen, gegebenenfalls über Pumpen (6, 7), leitbar sind, dadurch gekennzeichnet, daß die Elektroden (13) an ihren Randbereichen eine zumindest teilweise umlaufende Verjüngung (14, 17) aufweisen, und die Separatoren (10) an ihrem mit den Randbereichen der Elektroden mittel- bzw. unmittelbar anliegenden Randbereich eine zumindest teilweise umlaufende Verdickung (11, 18) aufweisen, wobei die größte Erstreckung (f) der Verdickung des Separators (10), gemessen normal zur Separatorfläche, größer, insbesondere das zwei- bis vierfache, beträgt, als die kleinste Erstreckung (e) der Verjüngung der Elektrode (13), gemessen normal zur Elektrodenfläche, ist.

2. Metall/Halogen-Batterie nach Anspruch 1, dadurch gekennzeichnet, daß die Verjüngungen (14) und/oder die Verdickungen (11) der Elektrode und/oder Separatoren gleichen Querschnitt aufweisen.

3. Metall/Halogen-Batterie nach Anspruch 1 oder 2, dadurch gekennzeichnet, daß die Zu- und/oder Abflußleitungen (12) für den Elektrolyten durch die Verdickungen (11, 18) des Separators (10) geführt sind.

4. Metall/Halogen-Batterie nach Anspruch 1, 2 oder 3, dadurch gekennzeichnet, daß die jeweilige Erstreckung normal zur Elektrodenfläche der Verjüngungen (17) unterschiedlich je nach Flächenseite der Elektrode ist (Fig. 4).

5. Metall/Halogen-Batterie nach einem der Ansprüche 1 bis 4, dadurch gekennzeichnet, daß die Verdickungen und/oder Verjüngungen mit einem Rahmen, insbesondere aus thermoplastischen Material, gebildet sind.

6. Metall/Halogen-Batterie nach einem der Ansprüche 1 bis 5, dadurch gekennzeichnet, daß die Verjüngungen und/oder die Verdickungen im Querschnitt im wesentlichen rechteckig ausgebildet sind (Fig. 4 und Fig. 5).

7. Metall/Halogen-Batterie nach einem der Ansprüche 1 bis 5, dadurch gekennzeichnet, daß die Verjüngungen und/oder die Verdickungen im Querschnitt sich zum Rand bzw. zum Inneren des Separators verjüngend ausgebildet sind (Fig. 6).

8. Metall/Halogen-Batterie nach Anspruch 7, dadurch gekennzeichnet, daß die zum Rand sich verjüngend ausgebildeten Verjüngungen im wesentlichen spitzzulaufend ausgebildet sind (Fig. 6).

9. Metall/Halogen-Batterie nach einem der Ansprüche 1 bis 8, dadurch gekennzeichnet, daß die Verjüngungen und/oder die Verdickungen mit zu dem elektrochemisch bzw. ionenspezifischen Material die Elektroden bzw. Separatoren unterschiedlichem Material aufgebaut sind.

10. Metall/Halogen-Batterie nach einem der Ansprüche 1 bis 9, dadurch gekennzeichnet, daß die aktive elektrisch leitbare Masse der Elektroden mit Kohlenstoff gefülltem thermoplastischem Material, insbesondere Polyäthylen, und die Randbereiche elektrisch nichtleitend aufgebaut sind.

Fig. 1

Fig. 2

Fig. 3a

Fig. 3b

Fig. 4

Fig. 5

Fig. 6